# EUROPÄISCHE PATENTSCHRIFT

(11) **EP 1 837 069 B1**
(45) Veröffentlichungstag und Bekanntmachung des Hinweises auf die Patenterteilung: **06.10.2010**
(21) Anmeldenummer: 07004856.6
(22) Anmeldetag: 09.03.2007
(51) Int. Cl.: B01F 3/12, B01F 15/06, A61C 13/00, A61K 6/02, A61C 13/08

(54) **Dosiervorrichtung zum Mischen einer oder mehrerer pulverförmiger und/oder flüssiger Substanzen für dentaltechnische Anwendungen**
Dosage device for mixing one or more powdery and/or liquid substances for dental applications
Dispositif de dosage destiné au mélange de une ou plusieurs substances poudreuses et/ou liquides pour techniques dentaires

(30) Priorität: 20.03.2006 DE 102006012630
(43) Veröffentlichungstag der Anmeldung: 26.09.2007
(73) Patentinhaber: Amann Girrbach AG, 6842 Koblach (AT)
(72) Erfinder: Koch, Timo, 6974 Gaissau (AT)
(74) Vertreter: Hofmann, Ralf U.

(56) Entgegenhaltungen:
- EP-A- 1 043 094
- EP-A2- 0 480 171
- DE-A1- 3 707 853
- DE-A1- 10 242 242
- DE-U1- 20 001 649
- AMANN GIRRBACH GMBH: "Giessen mit System"[Online] Seiten 1-13, XP002440486 Gefunden im Internet: URL:http://www.amanngirrbach.com/uploads/m edia/SP_Giessen_mit_System_DE.pdf> [gefunden am 2007-07-03]

## Beschreibung

Die Erfindung betrifft eine Dosiervorrichtung zum Mischen einer oder mehrerer pulverförmiger und/oder flüssiger Substanzen zur Vorbereitung von Mischungen von Gipsen oder zahnmedizinischen Einbettmassen.

Eine bekannte Dosiervorrichtung (DE-U-20001649) sieht mehrere Behälter für flüssige Substanzen vor, wobei diese flüssigen Substanzen über Leitungen zu einem Mischbehälter geführt werden. Die Zuführung wird über eine Schlauchpumpe bewerkstelligt, wobei zwischen der Pumpe und dem Austrittsende der Leitung eine Kühlvorrichtung angeordnet ist. Es können auch noch weitere Leitungen, Pumpen und Kühlvorrichtungen vorgesehen werden, mit denen weitere Flüssigkeiten aus anderen Vorratsgefäßen in den Mischbehälter gepumpt und dabei gekühlt werden. Auf diese Weise kann mit einer Art Durchlaufkühlung ein maximales Speichervermögen von 125 ml Flüssigkeit temperiert werden. Außerdem ist hier ein Vorabeinfüllen oder ein Vorabdosieren der pulverförmigen Substanz erforderlich, wobei in der Regel abgefüllte Beutel eingesetzt werden, bei welchen aber schon geringe Unterschiede in den Verarbeitungstemperaturen zu Expansionsveränderungen führen.

Im Dentallabor erfolgt die Temperierung der pulverförmigen Komponenten nur über gekühlte Flüssigkeiten. Oft wird auch in den Dentallabors ein Vielfaches der Beutelinhalte-angemischt. Es fallen daher immer auch Restmengen an.

Eine bekannte Vorrichtung der Anmelderin bei der zahntechnischen Gipsverarbeitung sieht ein Gerät vor, welches automatisch eine individuell einstellbare Menge Gips und die dazugehörige Menge destilliertes Wasser dosiert. Eine Kühlung ist dabei nicht vorgesehen, was aber bei reinen Gipsmassen nicht unbedingt erforderlich ist.

Die vorliegende Erfindung hat sich zur Aufgabe gestellt, eine Dosiervorrichtung der eingangs genannten Art zu schaffen, bei der durch gezielte Bevorratung und Temperierung aller Substanzen optimale Mischungen mit Zeit- und Materialeinsparung sowie Qualitätssteigerung erzielbar sind.

Erfindungsgemäß gelingt dies gemäß Anspruch 1 dadurch, dass sowohl die pulverförmigen als auch die flüssigen Substanzen innerhalb einer eine gemeinsame Heiz- und/oder Kühlvorrichtung aufweisenden Anordnung vorgesehen sind, wobei für die pulverförmigen und für die flüssigen Substanzen getrennte Dosiereinrichtungen vorhanden sind.

Die erfindungsgemäße Dosiervorrichtung dosiert somit als Gesamtsystem, also die Komponenten Einbettmasse-Pulver, Liquid und Wasser nach den spezifischen Anforderungen und behandelt diese nach individuellen Herstellerangaben (Temperierung, Lagerung, etc.). Alle pulverförmigen und flüssigen Komponenten werden innerhalb der Dosiervorrichtung temperiert und gelagert.

Besonders vorteilhaft ist dabei die Zeit- und Materialeinsparung sowie Qualitätssteigerung und die Qualitätsreproduktion bei der Dosierung der Komponenten.

Das Einbetten von Wachsmodellation in der Zahnmedizin und der anschließende Gießprozess sind der Abschluss eines aufwändigen zahntechnischen Arbeitsprozesses. Das Gussergebnis hängt stark von der Einbettmassenhandhabung und -verarbeitung ab, die von folgenden Faktoren beeinflusst wird:
- Lager- und Raumtemperatur
- Luftfeuchtigkeit
- Dosiergenauigkeit (Anteil Pulver, Liquid, destilliertes Wasser), wobei insbesondere auch das Konzentrationsverhältnis von Liquid zu destilliertem Wasser exakt einstellbar sein muss. Dieses Konzentrationsverhältnis liegt in der Regel bei ca. 60 % Liquid und ca. 40 % destilliertes Wasser, wobei dann zusätzlich eine Einstellung auf die genaue Menge des Anteiles der pulverförmigen Substanz exakt erfolgen muss.

Besonderer Nutzen der erfindungsgemäßen Dosiervorrichtung sind gleichmäßige, reproduzierbare Ergebnisse bei der Verarbeitung von Einbettmasse. Die Fehlerquote und Ausschussrate der Gussergebnisse wird minimiert. Dies geschieht durch gleichmäßige und nach Herstellerangaben einstellbare Temperierung der Einzelkomponenten.

Außerdem wird durch einfaches Handling und genaue automatische Dosierung der Arbeitsaufwand für den Zahntechniker reduziert. Berechnungsfehler der Mengenverhältnisse und Konzentration der Komponenten werden verhindert.

Derzeit werden hauptsächlich vordosierte Folienbeutel mit meist zwischen 150 g und 200 g Pulverinhalt verwendet. Die Verwendung größerer Gebinde und das Anmischen der tatsächlich benötigten Menge führt zu Materialersparnis von ca. 20 % und daraus resultierender Kostenersparnis für das Dentallabor.

Ein weiterer Vorteil ergibt sich durch die Reduktion der Staubbelastung von quarzhaltigem Feinstaub. Bei dauerhafter Belastung kann das Einatmen von quarzhaltigem Feinstaub Silikose verursachen.

Weiter wird vorgeschlagen, dass alle Substanzen in Vorratsbehältern auf die gleiche Temperatur kühlbar oder aufheizbar sind. Gerade durch die auf das gleiche Temperaturniveau gebrachten Substanzen kann eine optimale Mischbarkeit und eine exakte, reproduzierbare Expansion der Einbettmassenhohlform erzielt werden.

Einbettmassenpulver wird in einem festen Verhältnis mit einem Flüssigkeitsgemisch angerührt. Das Flüssigkeitsgemisch besteht aus einem speziell auf die jeweilige Einbettmasse abgestimmten Liquid und destilliertem Wasser. Je nach Arbeitsobjekten (Kronen, Brücken, Teleskope, Modellguss) und Materialtyp (Edelmetall, Nichteisenlegierungen, Modellgusslegierungen, Presskeramik) sind unterschiedliche Expansionen der Einbettmassenhohlform erforderlich, um die erforderliche Passgenauigkeit der Arbeit zu erreichen. Die Expansionssteuerung erfolgt durch unterschiedliche Verhältnisse von Liquid zu destilliertem Wasser. Das erforderliche Dosieren erfolgt heute weitgehend manuell. Dabei können Fehler beim Errechnen der Mengen, beim Ablesen von den Dosierhilfen und durch nicht beachtete Rückstände in den Messbehältern auftreten.

Zudem weichen die Einbettmassenpulvermengen in den vordosierten Folienbeuteln je nach Hersteller bis zu 2 % von den Sollmengen ab. Die auf den Sollbeutelinhalt dosierten Flüssigkeitsmengen ergeben dann Streuungen der Mischungsverhältnisse und somit Abweichungen in der Expansion und der Passgenauigkeit des Gerüstes.

Zusätzlich können bereits geringe Unterschiede in den Verarbeitungstemperaturen (Raumtemperatur, Temperatur der einzelnen Substanzen) zu Expansionsveränderungen führen. Temperierung laut den Herstellerangaben erfolgt meistens nur über gekühlte Flüssigkeiten. Durch die vorliegende Erfindung können eben alle Substanzen auf die gleiche vorgegebene Temperatur gekühlt oder bei Bedarf auch aufgeheizt werden.

In diesem Zusammenhang ist es auch vorteilhaft, dass die für alle Substanzen vorgesehenen Dosiereinrichtungen getrennt steuerbar sind. Es ist somit jede vorgegebene Mischungsvariante einstellbar oder aber es sind bei möglichen Abweichungen des fertigen Gemisches Anpassungen für die folgenden Dosiervorgänge möglich.

Dabei ist es eine zweckmäßige Ausgestaltung, wenn die Temperatur der Substanzen in den Vorratsbehältern und die. Dosiereinrichtungen aufeinander abgestimmt vorprogrammierbar sind. Es kann dadurch eine möglichst rasche Angleichung der Temperaturen erreicht werden, wobei ja die Kühlung flüssiger Substanzen in der Regel schneller und einfacher von statten gehen kann als die Kühlung pulverförmiger Substanzen.

Eine optimale Ausgestaltung sieht ferner eine Anzeigeanordnung für die gewählten Parameter von Temperatur und Dosiermenge und das Mischungsverhältnis der Substanzen vor. Es kann dadurch immer auch eine visuelle Kontrolle der eingestellten Werte und somit auch die Konzentration der Substanzen erfolgen.

Weiter ist eine Ausführung zweckmäßig, welche gekennzeichnet ist durch eine abrufbare Anzeige der gewählten Temperatur und der Isttemperatur in den Vorratsbehältern. Es kann dadurch festgestellt werden, ob die Dosiervorrichtung schon einsatzbereit ist oder nicht. Ein optimaler Start der Dosiervorrichtung ist ja erst dann sinnvoll, wenn alle eingestellten und für die Mischung vorgegebenen Parameter erreicht sind.

Eine sinnvolle Maßnahme in diesem Zusammenhang ist dann gegeben, wenn die Dosiereinrichtungen nur bei Übereinstimmung der gewählten Temperatur und der Isttemperatur in Betrieb setzbar sind. Es ist aber auch denkbar, dass nur ein entsprechender Warnhinweis in akustischer oder visueller Form gegeben wird, wobei natürlich auch einfach eine Sperre vorhanden ist, die die Inbetriebsetzung in einem solchen Zustand verhindert.

In konstruktiver Hinsicht ist auch eine visuelle Kontrolle der Inhalte der Vorratsbehälter vorteilhaft. Es wird daher vorgeschlagen, dass die Vorratsbehälter mit Sichtfenstern zur Füllstandskontrolle ausgestattet sind.

Es ist aber auch denkbar oder als zusätzliche Maßnahme sinnvoll, wenn jedem Vorratsbehälter eine Nachfüllkontrollanordnung, z.B. in Form von Lichtsensoren, Infrarotlicht od.dgl. an einem Deckel oder einer Wand zugeordnet ist. Es kann daher auch diese Maßnahme automatisiert werden. Es kann dann kein Dosiervorgang beginnen, wenn in einem oder mehreren Vorratsbehältern zu wenig pulverförmige oder flüssige Substanzen vorhanden sind.

Weiter wird vorgeschlagen, dass die Kühlvorrichtung von den Vorratsbehältern zugeordneten Peltierelementen gebildet ist.

Hauptproblematiken der pulverförmigen Substanz ist die Entmischungsanfälligkeit aufgrund unterschiedlicher Partikelgrößen und ein schlechtes Fließverhalten des Pulvers aus Silos. Ein Rütteln kann nicht angewendet werden und es ist daher zur Optimierung eine vibrationsfreie Kühlung nötig. Durch den Einsatz von Peltierelementen ist die Kühlung vibrationsarm.

In vorteilhafter Art und Weise wird vorgeschlagen, dass zur Förderung und Dosierung der pulverförmigen Substanz(en) eine Förderschnecke vorgesehen ist. Auch dadurch wird eine vibrationsarme Konstruktion geschaffen und gerade durch das relativ schlechte Fließverhalten der pulverförmigen Substanz kann hier das Optimale herausgeholt werden. Damit ist aber auch immer eine vollständige Entleerung des Vorratsbehälters für die pulverförmige Substanz gewährleistet.

Durch das schlechte Fließverhalten ergeben sich bei bekannten Ausführungen Probleme bei einer Entleerung von Behältern (Brücken- und Schachtbildung) und größere Mengenabweichungen bei einer maschinellen Dosierung. Bei der bestehenden Konstruktion der Anmelderin (Modell Smartbox) wird mittels einer Rütteleinrichtung die gewünschte Entleerung der Behälter und auch die Dosiergenauigkeit erreicht. Einbettmasse ist aber im Vergleich zum Gips entmischungsanfällig. Eingebrachte Vibrationen könnten zu einer Entmischung der pulverförmigen Substanz im Vorratsbehälter führen. Dies würde auch zu unterschiedlicher Zusammensetzungen und Korngrößenverteilung der pulverförmigen Substanz je nach Entleerung des Vorratsbehälters und somit zu unterschiedlichen Eigenschaften der angemischten Einbettmasse führen.

Ferner wird vorgeschlagen, dass die Förderschnecke mit einer progressiven Steigung ausgeführt ist. Dadurch wird einem Verdichten der pulverförmigen Substanz beim Fördern entgegengewirkt.

Eine weitere konstruktiv vorteilhafte Ausgestaltung liegt darin, dass über das Ende der Förderschnecke am Vorratsbehälter eine Dosierhülse montiert ist, welche an ihrer Unterseite Längsschlitze aufweist. Es ist somit eine zusätzliche Dosierhülse vorhanden, durch welche die pulverförmige Substanz hindurchgedrückt wird. Die einzelnen Schlitze sind so klein ausgeführt, dass durch sie auf Grund des schlechten Fließverhaltens keine pulverförmige Substanz herausrieseln kann. Nach dem Stoppen des Vorschubes der Förderschnecke fließt bzw. fällt keine weitere pulverförmige Substanz mehr nach. Der durch die Größe und Anzahl der einzelnen Schlitze bestimmte mögliche Gesamtdurchsatz an pulverförmiger Substanz ist auf die mögliche Fördermenge der Schnecke so angepasst, dass es wiederum zu keiner Verdichtung der pulverförmigen Substanz am Auslass des Vorratsbehälters kommen kann.

Ferner wird vorgeschlagen, dass der (die) Vorratsbehälter für die pulverförmige Substanz(en) Aluminiumbehälter mit spezieller Gleitbeschichtung ist (sind). Die Lagerung der pulverförmigen Substanz in einem Aluminiumbehälter z.B. mit spezieller PTFE-Beschichtung ist schon deswegen vorteilhaft, weil eine bessere Kälteleitung als bei Stahl gegeben ist und weil durch die Beschichtung ein besseres Gleiten der pulverförmigen Substanz an den Seitenwänden möglich wird.

Zur besseren Ausbringung der pulverförmigen Substanz trägt auch bei, wenn die Begrenzungswände zumindest des Vorratsbehälters für die pulverförmigen Substanzen einen steilen Neigungswinkel aufweisen. Auch ohne Rüttelvorgang wird dadurch der Vorschub der pulverförmigen Substanz vorteilhaft verbessert. Eine Gefahr des Entmischens ist daher praktisch ausgeschlossen.

Eine bevorzugte Ausführungsform sieht dabei vor, dass wenigstens zwei einander gegenüberliegende Begrenzungswände des Vorratsbehälters für die pulverförmigen Substanzen einen Winkel von annähernd 30° miteinander einschließen. Dieser Neigungswinkel gewährleistet eine optimale Möglichkeit des Weiterrutschens der pulverförmigen Substanz bis zur vollständigen Entleerung des Vorratsbehälters 3.

Eine weitere konstruktive Gestaltung sieht vor, dass als Dosiereinrichtung für die flüssigen Substanzen Schlauchquetschpumpen, Kolbenpumpen od.dgl. vorgesehen sind. Hauptproblematik des Liquids ist die Neigung zum Auskristallisieren. Durch die erfindungsgemäßen Maßnahmen wird das Liquid in einem geschlossenen System gelagert, gefördert und dosiert. Die Förderung mittels Schlauchquetschpümpen oder Kolbenpumpen ist daher eine optimale Ergänzung dazu.

Weitere erfindungsgemäße Merkmale und besondere Vorteile werden in der nachstehenden Beschreibung anhand der Zeichnung noch näher erläutert. Es zeigen:
- Fig.1: eine Schrägsicht einer erfindungsgemäßen Dosiervorrichtung von der Seite und von hinten gesehen mit strichlierter Darstellung des umgebenden Gehäuses;
- Fig.2: eine Schrägsicht einer erfindungsgemäßen Dosiervorrichtung von der Seite und von vorne gesehen mit strichlierter Darstellung des umgebenden Gehäuses;

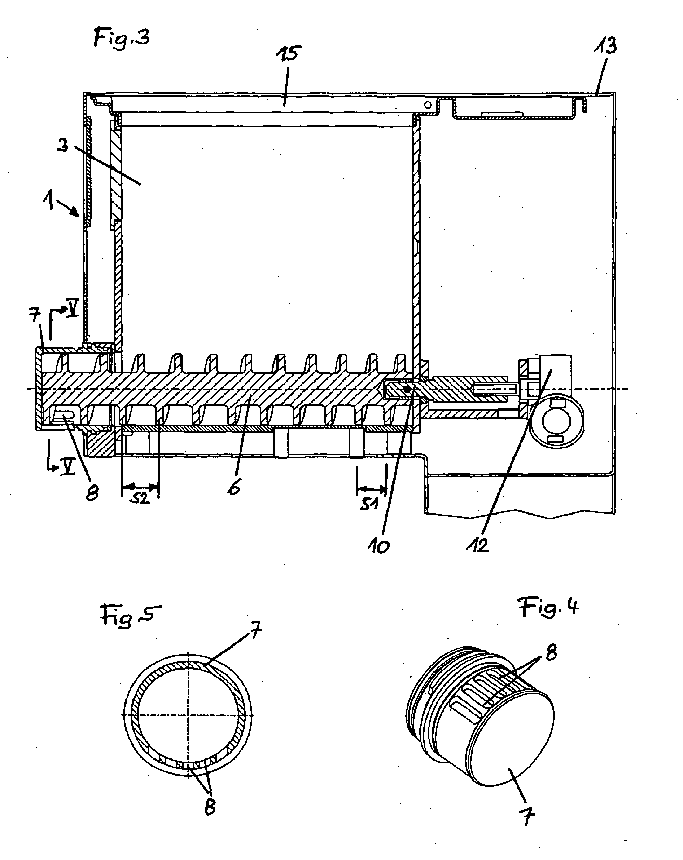

- Fig.3: einen Schnitt durch die Dosiervorrichtung im Bereich einer für die Zuführung der pulverförmigen Substanz vorgesehen Förderschnecke;
- Fig.4: eine im Zusammenhang mit der Förderschnecke einzusetzenden Dosierhülse in Schrägsicht;
- Fig.5: einen Schnitt nach der Linie V-V in Fig.3 durch die Dosierhülse.

Bei der erfindungsgemäßen Dosiervorrichtung 1 zum Mischen einer oder mehrerer pulverförmiger und/oder flüssiger Substanzen, insbesondere zur Vorbereitung von Mischungen von Gipsen oder zahnmedizinischen Einbettmassen, werden sowohl die pulverförmigen als auch die flüssigen Substanzen innerhalb einer eine gemeinsame Heiz- und/oder Kühlvorrichtung 2 aufweisenden Anordnung vorgesehen, wobei für die pulverförmigen und für die flüssigen Substanzen getrennte Dosiereinrichtungen vorhanden sind.

Die pulverförmigen Substanzen können Gips oder aber spezielle Pulvermischungen für eine zahnmedizinische Einbettmasse sein. Als flüssige Substanzen sind einerseits destilliertes Wasser und andererseits ein Liquid vorgesehen, welches als Silicatgel (wässrige SiO₂-Lösung) ausgeführt sein kann.

Wesentlich ist dabei, dass alle Substanzen in den Vorratsbehältern 3, 4, 5 auf die gleiche Temperatur kühlbar oder aufheizbar sind und dass die für alle Substanzen vorgesehenen Dosiereinrichtungen getrennt steuerbar sind.

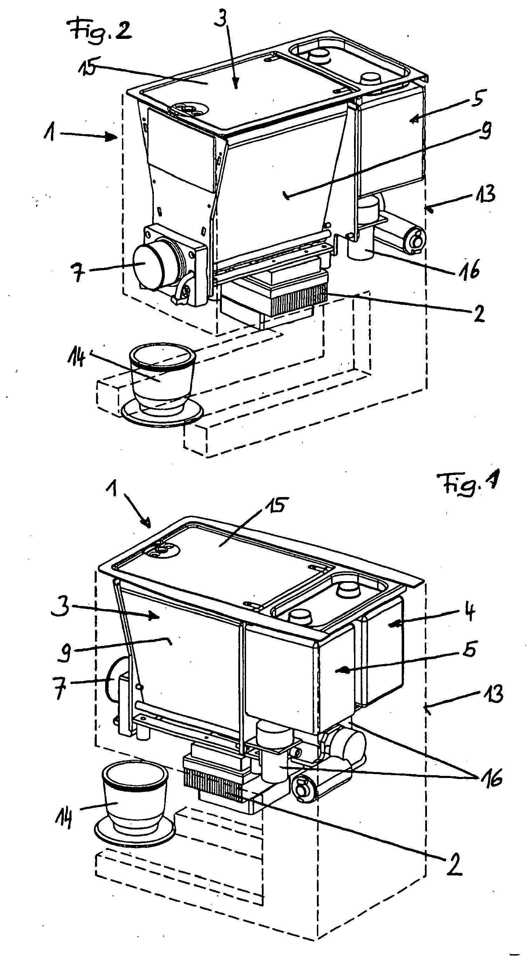

In den Fig.1 und 2 ist das Gehäuse 13 der Dosiervorrichtung strichliert dargestellt, um die innen liegenden Bereiche besser sichtbar zu machen. Die pulverförmigen und flüssigen Substanzen werden zuerst in einen unterstellbaren Mischbecher 14 eingebracht, wonach dann das komplette Gemisch einer Mischvorrichtung zugeführt wird. Dabei werden zuerst die flüssigen Substanzen in den Mischbecher 14 eingebracht und erst dann die pulverförmigen Substanzen.

Die Temperatur der Substanzen in den Vorratsbehältern 3, 4, 5 und die Dosiereinrichtungen sind aufeinander abgestimmt vorprogrammierbar, wobei es auch sinnvoll ist, eine Anzeigeanordnung für die gewählten Parameter von Temperatur und Dosiermenge der Substanzen vorzusehen.

Die Dosiervorrichtung kann ferner mit einer abrufbaren Anzeige der gewählten Temperatur und der Isttemperatur in den Vorratsbehältern 3, 4, 5 ausgestattet sein. Dabei ergibt sich auch die Möglichkeit, die Dosiereinrichtungen nur bei Übereinstimmung der gewählten Temperatur und der Isttemperatur in Betrieb setzbar auszubilden.

Werden gewisse einzelne Substanzen oder alle zu mischenden Komponenten bei Raumtemperatur gelagert, können über das Jahr hinweg Unterschiede von bis zu 15° bis 20° auftreten, z.B. der Unterschied zwischen Morgen und Mittag oder aber zwischen Sommer und Winter. Daher ist ein Abgleich zwischen Isttemperatur und der vorgegebenen Temperatur von wesentlicher Bedeutung.

Die Vorratsbehälter 3, 4, 5 können mit Sichtfenstern zur Füllstandskontrolle ausgestattet sein. Eine Nachfüllkontrollanordnung kann z.B. in Form von Lichtsensoren, Infrarotlicht od.dgl. an einem Deckel oder einer Wand jedes Vorratsbehälters 3, 4, 5 angeordnet sein. Es ist aber auch möglich, gegebenenfalls zusätzlich zu den Sichtfenstern jedem Vorratsbehälter 3, 4, 5 eine Nachfüllkontrollanordnung zuzuordnen.

Um Vibrationen bei der Dosiervorrichtung möglichst auszuschalten, wird eine von Peltierelementen gebildete Kühlvorrichtung 2 den Vorratsbehältern 3, 4, 5 zugeordnet.

Eine besondere konstruktive Gestaltung ist zur Förderung und Dosierung der pulverförmigen Substanzen vorgesehen. Es ist hier eine Förderschnecke 6 vorgesehen. Auch dies trägt zur vibrationsarmen oder sogar vibrationsfreien Austragung der pulverförmigen Substanz bei, so dass eine Entmischung verhindert werden kann. Die Förderschnecke 6 ist über eine Steckkupplung 10 und eine Antriebswelle 11 mit einem Antriebsmotor 12 verbunden.

Die Förderschnecke 6 ist mit einer progressiven Steigung S1 bis S2 ausgeführt, um einem Verdichten der pulverförmigen Substanz entgegenzuwirken. Die Steigung S1 am Anfang der Förderschnecke 6 ist klein und die Steigung S2 am Austragsende der Förderschnecke ist größer bemessen.

Am Ende der Förderschnecke 6 am Vorratsbehälter 3 ist eine Dosierhülse 7 montiert, welche an ihrer Unterseite je nach Bedarf in verschiedenen Größen und in verschiedener Anzahl Längsschlitze 8 aufweist. Die einzelnen Schlitze 8 sind so klein ausgeführt, dass durch sie auf Grund des schlechten Fließverhaltens kein Pulver herausrieseln kann. Nach dem Stoppen des Vorschubes des Förderschnecke 6 fließt oder fällt kein Pulver mehr nach. Der durch die Größe und Anzahl der einzelnen Schlitze 8 bestimmte mögliche Gesamtdurchsatz an Pulver ist auf die mögliche Fördermenge der Schnecke 6 so angepasst, dass es wiederum zu keiner Verdichtung des Pulvers am Auslass des Vorratsbehälters 3 kommt.

Die Dosierhülse 7 ist nach Art eines Bajonettverschlusses aufgesetzt und kann daher auch leicht demontiert werden. Eine einfache Montage und Demontage ist vorteilhaft, um die Förderschnecke 6 herausziehen und eine Reinigung des Vorratsbehälters 3 vornehmen zu können.

Zusätzlich wird in diesem Zusammenhang in vorteilhafter Weise eine Abdeckung im Bereich der Dosierhülse 7 vorgesehen, die bei einem Nichtgebrauch oder bei einer längeren Unterbrechung aufgesetzt werden kann. Dadurch kann auch der Austrittsbereich für die pulverförmige Substanz abgedeckt werden, damit keine Feuchtigkeit eindringen kann. Es kann aber auch in umgekehrter Weise eine Sperre der Förderschnecke 6 und auch der anderen Dosiereinrichtungen erfolgen, wenn diese Abdeckung nicht vor dem Gebrauch der Dosiervorrichtung abgenommen worden ist.

Der Vorratsbehälter 3 für die pulverförmige Substanz ist als Aluminiumbehälter mit spezieller Gleitbeschichtung ausgestattet. Vorteilhaft ist hier eine z.B. PTFE-Beschichtung vorgesehen, Ferner weisen zumindest die seitlichen Begrenzungswände 9 des Vorratsbehälters 3 für die pulverförmigen Substanzen einen steilen Neigungswinkel auf. Eine vorteilhafte Ausgestaltung liegt darin, dass wenigstens zwei einander gegenüberliegende Begrenzungswände 9 des Vorratsbehälters 3 für die pulverförmigen Substanzen einen Winkel von annähernd 30° miteinander einschließen. Alle Vorratsbehälter 3, 4, 5 sind mit dicht verschließbaren Deckeln versehen. Insbesondere aber der den Vorratsbehälter 3 abdeckende Deckel 15 ist umlaufend mit einer besonderen Dichtung ausgeführt, um gerade dadurch verhindern zu können, dass Feuchtigkeit in die pulverförmige Substanz eindringen kann. Dieser Deckel 15 ist aber auch vorteilhaft zur Erhaltung einer gleich bleibenden Temperatur im Vorratsbehälter 3. Da die pulverförmigen Substanzen hygroskopisch wirkende Materialien sind und daher sehr anfällig für die Aufnahme von Feuchtigkeit sind, ist diese gute Anordnung eines Deckels von wesentlicher Bedeutung. Außerdem ist dadurch der Einsatz von Nachfüllkontrollanordnungen z.B. in Form von Lichtsensoren, Infrarotlicht od.dgl. möglich, da dann auch keine störenden Einflüsse durch das Tageslicht auftreten.

Bei der Anordnung eines besonderen Deckels 15 beim Vorratsbehälter 3 können im Deckelbereich auch zusätzlich Trockenbeutel eingesetzt werden. Dies ist insbesondere dann von Vorteil, wenn pulverförmige Substanz nachgefüllt werden muss, wobei es dann bei einem entsprechenden Temperaturunterschied zu einer Schwitzwasserbildung an den Begrenzungswänden 9 des Vorratsbehälters kommen kann.

Hier ist es dann auch möglich, Warnhinweise vorzusehen, wenn der Deckel 15 nicht ordnungsgemäß geschlossen ist oder wenn der Deckel 15 zu lange offen steht, so dass dann zeitabhängig ein Warnsignal ertönen kann oder wahrnehmbar wird.

Als Dosiereinrichtung für die flüssigen Substanzen sind in vorteilhafter Weise Schlauchquetschpumpen 16 oder aber Kolbenpumpen vorgesehen.

Durch die erfindungsgemäße Dosiervorrichtung können die Komponenten Einbettmasse-Pulver, Liquid und Wasser nach den spezifischen Anforderungen der Einbettmassenhersteller dosiert werden Es ist eine Behandlung der Komponenten exakt nach Herstellerangaben (Temperierung, Lagerung, etc.) möglich. Zeit- und Materialeinsparung, Qualitätssteigerung und - reproduktion bei der Dosierung der Komponenten sind grundlegende erzielbare Vorteile.

Die Dosierung einer Einbettmasse mit dazugehörendem Liquid und destilliertem Wasser wird optimal gelöst, wobei die Gerätegröße (Standfläche) aufgrund des beschränkten Platzangebotes im Gipsraum eines Dentallabors klein gehalten werden kann. Ein sauberer Arbeitsprozess mit Reduzierung des Überschussmaterials (Abwasserbelastung) ist ein wesentlicher Faktor bei der erfindungsgemäßen Dosiervorrichtung. Außerdem ist eine Reduzierung der Staubbelastung beim Arbeiten mit Einbettmasse möglich geworden.

Im Rahmen der Erfindung ist es durchaus möglich, Vorratsbehälter 3 für mehr als eine pulverförmige Substanz oder auch Vorratsbehälter 4, 5 für mehr als zwei flüssige Substanzen vorzusehen. Dabei können jedem Vorratsbehälter 3, 4, 5 wiederum getrennte Dosiereinrichtungen zugeordnet sein. Vorteilhaft sind aber immer alle Vorratsbehälter mit einer einzigen Kühl- und/oder Heizeinrichtung versehen, um damit alle Substanzen mit der gleichen Ausgangstemperatur zum Mischen bereit zu halten und einem Mischbecher zum Mischen zuzuführen.

## Patentansprüche

1. Dosiervorrichtung zum Mischen einer oder mehrerer pulverförmiger und/oder flüssiger Substanzen zur Vorbereitung von Mischungen von Gipsen oder zahnmedizinischen Einbettmassen, **dadurch gekennzeichnet, dass** sowohl die pulverförmigen als auch die flüssigen Substanzen innerhalb einer eine gemeinsame Heiz- und/oder Kühlvorrichtung (2) aufweisenden Anordnung vorgesehen sind, wobei für die pulverförmigen und für die flüssigen Substanzen getrennte Dosiereinrichtungen vorhanden sind.

2. Dosiervorrichtung nach Anspruch 1, **dadurch gekennzeichnet, dass** alle Substanzen in Vorratsbehältern (3, 4, 5) auf die gleiche Temperatur kühlbar oder aufheizbar sind.

3. Dosiervorrichtung nach Anspruch 1 oder 2, **dadurch gekennzeichnet, dass** die für alle Substanzen vorgesehenen Dosiereinrichtungen getrennt steuerbar sind.

4. Dosiervorrichtung nach den Ansprüchen 1 bis 3, **dadurch gekennzeichnet, dass** die Temperatur der Substanzen in den Vorratsbehältern (3, 4, 5) und die Dosiereinrichtungen aufeinander abgestimmt vorprogrammierbar sind.

5. Dosiervorrichtung nach den Ansprüchen 1 bis 4, **gekennzeichnet durch** eine Anzeigeanordnung für die gewählten Parameter von Temperatur und Dosiermenge und das Mischungsverhältnis der Substanzen.

6. Dosiervorrichtung nach einem der vorhergehenden Ansprüche, **gekennzeichnet durch** eine abrufbare Anzeige der gewählten Temperatur und der Isttemperatur in den Vorratsbehältern (3, 4, 5).

7. Dosiervorrichtung nach Anspruch 6, **dadurch gekennzeichnet, dass** die Dosiereinrichtungen nur bei Übereinstimmung der gewählten Temperatur und der Isttemperatur in Betrieb setzbar sind.

8. Dosiervorrichtung nach den vorhergehenden Ansprüchen, **dadurch gekennzeichnet, dass** die Vorratsbehälter (3, 4, 5) mit Sichtfenstern zur Füllstandskontrolle ausgestattet sind.

9. Dosiervorrichtung nach den vorhergehenden Ansprüchen, **dadurch gekennzeichnet, dass** jedem Vorratsbehälter (3, 4, 5) eine Nachfüllkontrollanordnung, z.B. in Form von Lichtsensoren oder Infrarotlicht an einem Deckel oder einer Wand zugeordnet ist.

10. Dosiervorrichtung nach einem der vorstehenden Ansprüche, **dadurch gekennzeichnet, dass** die Kühlvorrichtung (2) von den Vorratsbehältern (3, 4, 5) zugeordneten Peltierelementen gebildet ist.

11. Dosiervorrichtung nach einem der vorstehenden Ansprüche, **dadurch gekennzeichnet, dass** zur Förderung und Dosierung der pulverförmigen Substanz(en) eine Förderschnecke (6) vorgesehen ist.

12. Dosiervorrichtung nach Anspruch 11, **dadurch gekennzeichnet, dass** die Förderschnecke (6) mit einer progressiven Steigung (S1, 52) ausgeführt ist.

13. Dosiervorrichtung nach den Ansprüchen 11 und 12, **dadurch gekennzeichnet, dass** über das Ende der Förderschnecke (6) am Vorratsbehälter (3) eine Dosierhülse (7) montiert ist, welche an ihrer Unterseite Längsschlitze (8) aufweist.

14. Dosiervorrichtung nach einem der vorstehenden Ansprüche, **dadurch gekennzeichnet, dass** der (die) Vorratsbehälter (3) für die pulverförmige Substanz(en) Aluminiumbehälter mit spezieller Gleitbeschichtung ist (sind).

15. Dosiervorrichtung nach Anspruch 14, **dadurch gekennzeichnet, dass** die Begrenzungswände (9) zumindest des Vorratsbehälters (3) für die pulverförmigen Substanzen einen steilen Neigungswinkel aufweisen.

16. Dosiervorrichtung nach Anspruch 15, **dadurch gekennzeichnet, dass** wenigstens zwei einander gegenüberliegende Begrenzungswände (9) des Vorratsbehälters (3) für die pulverförmigen Substanzen einen Winkel von annähernd 30° miteinander einschließen.

17. Dosiervorrichtung nach einem der vorstehenden Ansprüche, **dadurch gekennzeichnet, dass** als Dosiereinrichtung für die flüssigen Substanzen Schlauchquetschpumpen (16) oder Kolbenpumpen vorgesehen sind.

## Claims

1. Metering device for mixing one or more powdered and/or liquid substances to prepare mixtures of plasters or dental investment compounds, **characterised in that** both the powdered and the liquid substances are provided within an arrangement having a common heating and/or cooling device (2), with separate metering means being available for the powdered and/or the liquid substances.

2. Metering device according to claim 1, **characterised in that** all the substances can be cooled or heated to the same temperature in supply containers (3, 4, 5).

3. Metering device according to claim 1 or 2, **characterised in that** the metering means provided for all the substances can be controlled separately.

4. Metering device according to claims 1 to 3, **characterised in that** the temperatures of the substances in the supply containers (3, 4, 5), and the metering means, can be pre-programmed in such a way as to be adjusted to one another.

5. Metering device according to claims 1 to 4, **characterised by** a display or indicator arrangement for the selected parameters of temperature and metered amount and proportion in mixtures of the substances.

6. Metering device according to one of the preceding claims, **characterised by** a display or indication which can be called up of the temperature selected and the actual temperature in the supply containers (3, 4, 5).

7. Metering device according to claim 6, **characterised in that** the metering means can be put into operation only if the temperature selected and the actual temperature agree.

8. Metering device according to the preceding claims, **characterised in that** the supply containers (3, 4, 5) are equipped with viewing windows to allow the filled levels to be checked.

9. Metering device according to the preceding claims, **characterised in that** each supply container (3, 4, 5) has associated with it an arrangement to check for topping-up, e.g. in the form of light sensors or infrared light, on a cover or a wall.

10. Metering device according to one of the preceding claims, **characterised in that** the cooling device (2) is formed by Peltier elements associated with the supply containers (3, 4, 5).

11. Metering device according to one of the preceding claims, **characterised in that** a feed screw (6) is provided to feed and meter the powdered substance(s).

12. Metering device according to claim 11, **characterised in that** the feed screw (6) is designed to have a progressive pitch (S1, S2).

13. Metering device according to claims 11 and 12, **characterised in that** there is mounted on the supply container (3), over the end of the feed screw (6), a metering tube (7) which has longitudinal slots (8) in its underside.

14. Metering device according to one of the preceding claims, **characterised in that** the supply container(s) (3) for the powdered substance(s) is/are aluminium containers having a special slide-permitting coating.

15. Metering device according to claim 14, **characterised in that** the boundary walls (9) at least of the supply container (3) for the powdered substances are at a steep angle of inclination.

16. Metering device according to claim 15, **characterised in that** at least two boundary walls (9) which are situated opposite one another of the supply container (3) for the powdered substances make an angle of approximately 30° with one another.

17. Metering device according to one of the preceding claims, **characterised in that** peristaltic pumps (16) or piston pumps are provided as the metering means for the liquid substances.

## Revendications

1. Dispositif de dosage destiné au mélange de une ou de plusieurs substances poudreuses et/ou liquides pour la préparation de mélanges de gypses ou de masses d'empreinte dentaires, **caractérisé en ce que** les substances poudreuses ainsi que liquides sont prévues dans un ensemble présentant un dispositif de chauffage et/ou de refroidissement (2) commun, pour les substances poudreuses et pour les substances liquides étant présents des dispositifs de dosage séparés.

2. Dispositif de dosage selon la revendication 1, **caractérisé en ce que** toutes les substances peuvent être refroidies ou chauffées dans des réservoirs de stockage (3, 4, 5) à la même température.

3. Dispositif de dosage selon la revendication 1 ou 2, **caractérisé en ce que** les dispositifs de dosage prévus pour toutes les substances peuvent être commandés séparément.

4. Dispositif de dosage selon les revendications 1 à 3, **caractérisé en ce que** la température des substances dans les réservoirs de stockage (3, 4, 5) et les dispositifs de dosage peuvent être préprogrammés de manière adaptée les uns aux autres.

5. Dispositif de dosage selon les revendications 1 à 4, **caractérisé par** un ensemble d'affichage pour les paramètres choisis de température et quantité de dosage et le dosage des substances.

6. Dispositif de dosage selon l'une quelconque des revendications précédentes, **caractérisé par** un affichage pouvant être appelé de la température choisie et de la température réelle dans les réservoirs de stockage (3, 4, 5).

7. Dispositif de dosage selon la revendication 6, **caractérisé en ce que** les dispositifs de dosage peuvent être mis en marche uniquement en cas de concordance entre la température choisie et la température réelle.

8. Dispositif de dosage selon les revendications précédentes, **caractérisé en ce que** les réservoirs de stockage (3, 4, 5) sont équipés de fenêtres d'inspection pour le contrôle du niveau.

9. Dispositif de dosage selon les revendications précédentes, **caractérisé en ce qu'**à chaque réservoir de stockage (3, 4, 5) est associé un ensemble de contrôle de remplissage par exemple sous la forme de capteurs de lumière ou lumière infrarouge sur un couvercle ou une paroi.

10. Dispositif de dosage selon l'une quelconque des revendications précédentes, **caractérisé en ce que** le dispositif de refroidissement (2) est formé par des éléments Peltier associés aux réservoirs de stockage (3, 4, 5).

11. Dispositif de dosage selon l'une quelconque des revendications précédentes, **caractérisé en ce que** pour le transport et le dosage de la/des substances poudreuses est prévue une vis sans fin (6).

12. Dispositif de dosage selon la revendication 11, **caractérisé en ce que** la vis sans fin (6) est réalisée avec un pas progressif (S1, S2).

13. Dispositif de dosage selon les revendications 11 et 12, **caractérisé en ce qu'**une douille de dosage (7) est montée au-dessus de l'extrémité de la vis sans fin (3) sur le réservoir de stockage (3), laquelle présente des fentes longitudinales (8) sur son côté inférieur.

14. Dispositif de dosage selon l'une quelconque des revendications précédentes, **caractérisé en ce que** le/les réservoirs de stockage (3) pour la/les substances poudreuses est/sont des réservoirs en aluminium doté d'un revêtement antiglisse spécial.

15. Dispositif de dosage selon la revendication 14, **caractérisé en ce que** les parois de limitation (9) au moins du réservoir de stockage (3) pour les substances poudreuses présentent un angle d'inclinaison obtus.

16. Dispositif de dosage selon la revendication 15, **caractérisé en ce qu'**au moins deux parois de limitation opposées (9) du réservoir de stockage (3) pour les substances poudreuses forment un angle d'approximativement 30° l'une avec l'autre.

17. Dispositif de dosage selon l'une quelconque des revendications précédentes, **caractérisé en ce que** des pompes péristaltiques (16) ou pompes à piston sont prévues comme dispositif de dosage pour les substances liquides.
